Europäisches Patentamt

(19) European Patent Office

Office européen des brevets

(11) Numéro de publication: **0 192 525 B1**

(12) # FASCICULE DE BREVET EUROPEEN

(45) Date de publication du fascicule du brevet:
26.07.89

(51) Int. Cl.⁴: **H01S 3/03, H01S 3/086**

(21) Numéro de dépôt: **86400164.9**

(22) Date de dépôt. **28.01.86**

(54) **Structure de laser à gaz.**

(30) Priorité: **05.02.85 FR 8501565**

(43) Date de publication de la demande:
**27.08.86 Bulletin 86/35**

(45) Mention de la délivrance du brevet:
**26.07.89 Bulletin 89/30**

(84) Etats contractants désignés:
**BE CH DE FR GB IT LI NL**

(56) Documents cités:
**US-A- 3 428 915**
**US-A- 3 907 408**

**REVIEW OF SCIENTIFIC INSTRUMENTS,
vol. 51, no. 2, février 1980, pages 240-243, American
Institute of Physics, New York, US; J.E. THOMAS et al.:
"Stable CO2 and N2O laser design"
NBS TECHNICAL NOTE,
no. 395, janvier 1971, pages 12-13, U.S. Government
Printing Office, Washington, D.C., US; J.S. WELLS et al.:
"Design for a variable-output-coupling far-infrared
Michelson laser"**

(73) Titulaire: **COMMISSARIAT A L'ENERGIE ATOMIQUE,
31/33, rue de la Fédération, F-75015 Paris(FR)**

(72) Inventeur: **Merard, René, 12 rue du Docteur Calmette,
F-91430 Igny(FR)**
Inventeur: **Quinque, Claude, 3 rue des Cités,
F-93300 Aubervilliers(FR)**

(74) Mandataire: **Mongrédien, André et al, c/o
BREVATOME 25, rue de Ponthieu, F-75008 Paris(FR)**

## Description

La présente invention a pour objet une structure de laser à gaz du type à cavité Fabry-Perot, notamment une structure de laser de faible puissance à dioxide de carbone $CO_2$.

Dans l'état actuel de la technique, une structure de laser à gaz de ce type comporte un tube à décharge où a lieu l'effet laser, aux extrémités duquel sont logés un miroir à réflexion totale et une lame semitransparente. Des dispositifs mécaniques permettent d'aligner l'axe du tube laser avec les normales au miroir et à la lame. Une structure de laser à gaz selon le préambule de la revendication 1 est connue du document US-A 3 428 915.

Pour obtenir un laser dont les caractéristiques soient constantes (notamment le mode de vibration), il est nécessaire que cet alignement soit conservé lors du fonctionnement. Or, la dilatation des composants due à la chaleur, les vibrations produites par toutes les liaisons mécaniques telles que les soudures, les emboîtements et les liaisons par contact ou frottement, ainsi que le refroidissement du tube laser concourent à modifier les caractéristiques de ce tube laser. Actuellement, on obtient donc des lasers dont la stabilité de l'alignement est toute relative et dont le prix de revient est très élevé.

L'invention a donc pour objet une structure de laser à gaz permettant de pallier les inconvénients précédemment mentionnés et de réduire le coût de fabrication d'une telle structure.

De façon plus précise, la structure de laser à gaz selon l'invention comporte :
- un tube laser,
- un tube enceinte dans lequel est monté le tube laser,
- des dispositifs de réflexion disposés vis-à-vis des extrémités dudit tube laser,
- des moyens d'orientation de ces dispositifs de réflexion,
- les dispositifs de réflexion ainsi que les moyens d'orientation associés étant montés sur le tube enceinte indépendamment du tube laser, cette structure étant caractérisée en ce que le tube laser est monté dans le tube enceinte par des moyens de fixation autorisant la libre dilatation du tube laser par rapport au tube enceinte.

Selon un mode préféré de réalisation, le support comprend un tube obturé par deux disques disposés chacun aux deux extrémités du tube et percés chacun d'un orifice, le tube laser étant disposé dans le tube enceinte et traversant les orifices.

De préférence, les dispositifs de réflexion sont respectivement supportés par deux têtes fixées sur chacun des disques et constituées chacune de deux pièces reliées par une membrane élastique, l'une des pièces étant fixée sur le disque correspondant et l'autre pièce portant le dispositif de réflexion correspondant, de telle sorte que chaque tête forme une cavité étanche dans laquelle débouche le tube laser.

Lesdits moyens d'orientation orientent les pièces portant les dispositifs de réflexion de telle sorte que ces dispositifs de réflexion soient perpendiculaires à l'axe du tube laser.

Des tubes de refroidissement débouchent dans le tube permettant l'introduction et la sortie d'un fluide réfrigérant circulant entre le tube laser et le tube enceinte. Des tubulures d'arrivée de gaz et de pompage traversant le tube sont reliées au tube laser. Des tubulures d'arrivée de gaz communiquent avec lesdites cavités.

Avantageusement, lesdits moyens de fixation du tube laser sur le tube enceinte sont constitués par une colle souple. Lesdits moyens de fixation du tube laser sur le tube enceinte peuvent également être constitués par un manchon logé fixement dans chacun des orifices et par au moins un joint disposé de façon étanche entre le manchon et le tube laser.

De préférence, les liaisons du tube et des têtes sur les disques sont assurées par collage rigide. Les liaisons entre les tubulures et le tube, entre les pièces de chacune des têtes et les manchons, entre les tubes de refroidissement et le tube sont commodément assurées par collage souple.

De façon avantageuse le tube enceinte est en verre borosilicate et les membranes sont métalliques.

Avantageusement, les pièces portant les dispositifs de réflexion sont pourvues de moyens de refroidissement.

Commodément des plaques formant chicane sont disposées dans l'espace annulaire défini entre le tube et le tube laser.

D'autres avantages et caractéristiques de l'invention ressortiront plus précisément de la description qui suit, donnée à titre explicatif mais nullement limitatif, en référence aux figures annexées, sur lesquelles :

- la figure 1 représente, en coupe longitudinale, un mode préféré de réalisation de la structure de laser selon l'invention,
- la figure 2 représente, en coupe selon le plan A-A de la figure 3, une des têtes métalliques et son dispositif de réflexion,
- la figure 3 représente, en coupe brisée selon le plan B-B de la figure 2, une des têtes métalliques avec en particulier lesdits moyens d'orientation, et
- la figure 4 représente, en coupe longitudinale une partie, d'un autre mode de réalisation de l'invention et plus particulièrement les moyens de fixation du tube laser sur le tube enceinte.

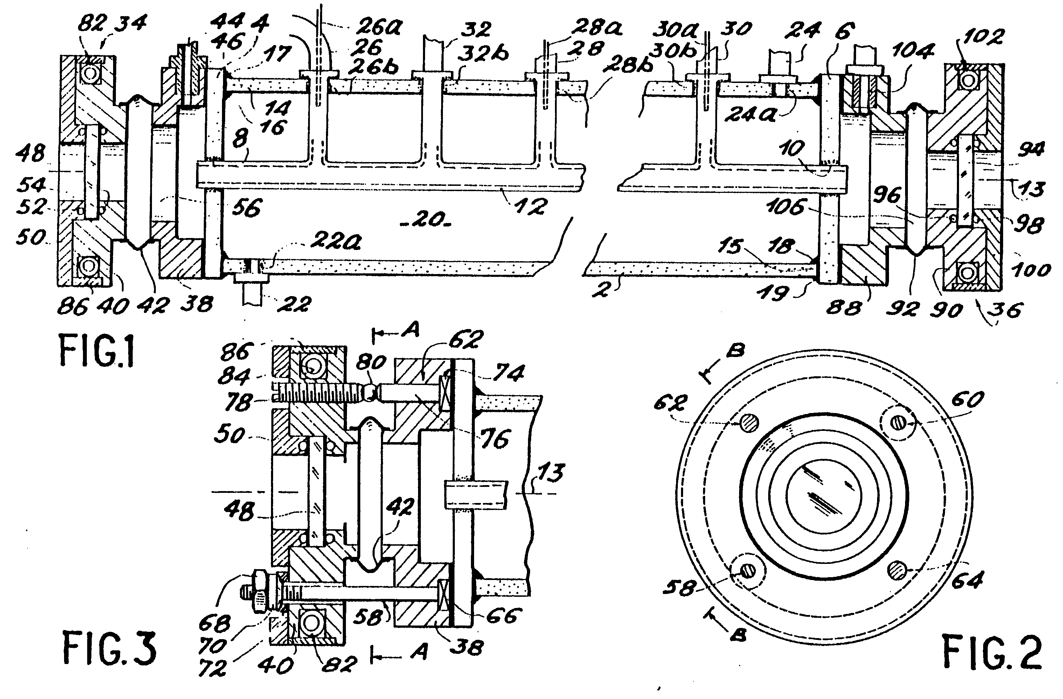

Un mode préféré de réalisation de la structure de laser à gaz selon l'invention est représenté sur la figure 1.

Cette structure comporte tout d'abord un premier tube 2 aux extrémités duquel sont disposés deux disques 4, 6. L'ensemble formé par le tube 2 et les deux disques 4, 6 est appelé tube enceinte. Deux orifices 8, 10 sont respectivement percés selon l'axe de chacun des disques 4, 6. Un deuxième tube 12, dit tube laser, est placé coaxialement dans le tube 2 et traverse les deux orifices 8, 10. le tube laser 12 définit un axe fictif 13 suivant lequel se propage le faisceau laser.

Le tube 2 est de grand diamètre (par exemple 50 mm pour un tube de 1120 mm de long), ce qui permet de diminuer les risques de flexion de ce tube (par augmentation de son moment d'inertie).

Le tube 2, le tube laser 12 et les deux disques 4, 6 sont en silice ou en verre borosilicate, matériau dont le coefficient de dilatation thermique est pratiquement négligeable. Ils peuvent être également en verre de silice.

Les deux disques 4, 6 sont fixés à chaque extrémité du tube 2 au moyen d'une colle rigide résistante à l'eau, du type colle époxy, déposée en fines couches 14, 15 sur les extrémités du tube enceinte 2, quatre congés 16, 17, 18, 19 de colle étant alors formés sur les parois intérieure et extérieure du tube et les faces en vis-à-vis des disques 4, 6.

Le tube laser 12 est fixé dans les orifices 8, 10 des deux disques 4, 6 au moyen d'une colle souple étanche à l'eau, du type colle silicones.

L'espace compris entre le tube 2, le tube laser 12 et les deux disques 4, 6 forme donc une enceinte 20 étanche dans laquelle circule un fluide réfrigérant qui est ordinairement de l'eau dont l'introduction et l'évacuation sont assurées par deux tubes de refroidissement 22, 24 débouchant dans ladite enceinte 20. Le tube 22 est disposé près du disque 4 et le tube 24 près du disque 6.

Des tubulures d'arrivée de gaz 26, 28, 30 et des tubulures de pompage 32 traversent le tube enceinte 2 et débouchent dans le tube laser 12. Des électrodes 26a, 28a, 30a sont respectivement disposées dans lesdites tubulures 26, 28, 30.

L'étanchéité de l'enceinte 20 entre le tube 2 et lesdits tubes de refroidissement 22, 24 et lesdites tubulures 26, 28, 30, 32 est assurée notamment pas des joints 22a, 24a, 26b, 28b, 30b, 32b, de colle souple étanche à l'eau.

Deux têtes 34, 36 de longueur la plus réduite possible sont respectivement fixées sur les disques 4, 6.

La tête 34 se compose de deux pièces 38, 40 annulaires, reliées par une membrane 42 annulaire. La première pièce 38 est fixée sur le disque 4 au moyen d'une colle rigide du type colle époxy. Une tubulure d'arrivée de gaz 44 traverse la paroi de la première pièce 38 et est fixée sur celle-ci par un connecteur 46. La deuxième pièce 40 comporte un épaulement intérieur sur lequel est appliqué un dispositif de réflexion tel qu'une lame semi-transparente 48. Un chapeau 50 fixé sur la deuxième pièce 40 vient bloquer la lame 48 contre ledit épaulement intérieur. Deux joints 52, 54 assurent l'étanchéité entre la deuxième pièce 40 et la lame 48. La membrane 42 est par exemple collé de façon étanche sur des épaulements formés sur les pièces 38 et 40.

Une telle disposition permet d'obtenir une cavité étanche 56 dont le fond est constitué par la lame 48 et dans laquelle débouche le tube laser 12.

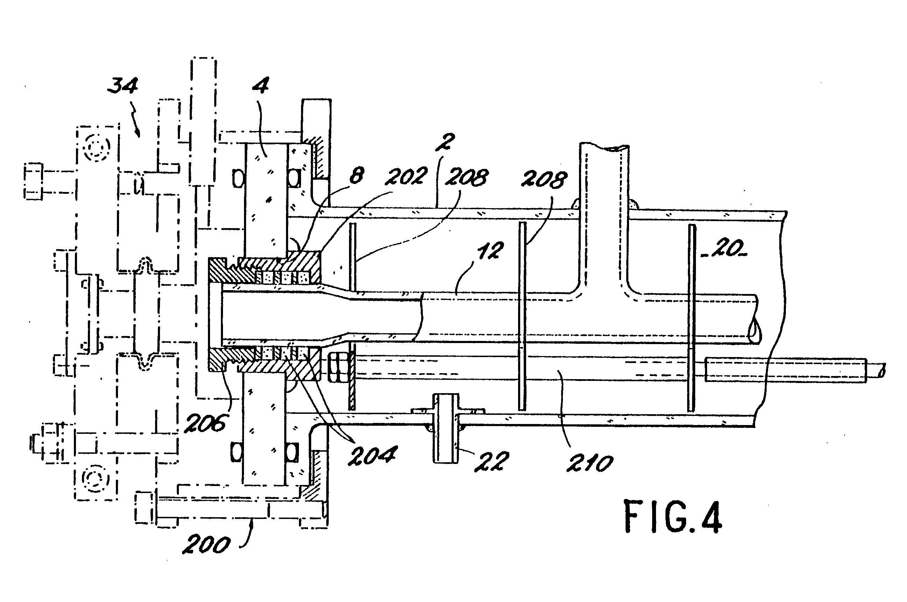

Une membrane 42 a une forme telle qu'elle est élastique et permet donc un réglage de l'orientation de la deuxième pièce 40 par rapport à la première pièce 38. Des moyens d'orientation et de blocage de cette deuxième pièce 40 par rapport à la première pièce 38 sont représentés sur les figures 2 et 3.

Ces moyens sont constitués par quatre vis parallèles à l'axe 13 du tube laser, disposées autour de la membrane 42 et traversant les deux pièces 38, 40. Elles sont disposées à 90° les unes des autres autour de l'axe 13. Ces vis sont composées de deux vis tirantes 58, 60 et de deux vis poussantes 62, 64 disposées alternativement.

La vis tirante 58 comporte une tête 66 noyée dans la première pièce 38. Un écrou 68 permet le serrage de la deuxième pièce 40 vers la première pièce 38 par l'intermédiaire d'une rondelle convexe 70 et d'une rondelle concave complémentaire 72 placées entre la deuxième pièce 40 et l'écrou 68.

La vis poussante 62 comporte une tige 76 dont une extrémité porte une tête 74 noyée et collée dans la première pièce 38, l'autre extrémité étant plane et située entre les deux pièces 38, 40. Une tige filetée 78 pourvue d'une bille 80 à une extrémité est vissée dans la deuxième pièce 40 de telle sorte que la bille 80 s'applique contre l'extrémité plane de la tige 76. Le vissage de la tige filetée 78 tend à écarter la deuxième pièce 40 de la première pièce 38.

Grâce à l'élasticité de la membrane 42, les quatre vis 58, 60, 62 et 64 permettent d'orienter la deuxième pièce 40 par rapport à la première pièce 38 afin d'aligner la normale à la lame semi-transparente 48 avec l'axe 13 du tube laser.

La deuxième pièce 40 est pourvue de moyens de refroidissement constitués par exemple d'un tube annulaire 82 isolé élastiquement disposé dans une gorge 84 usinée sur la face extérieure de cette deuxième pièce 40. Un fluide réfrigérant circule dans le tube 82. Un couvercle 86 obture la gorge 84 et enferme ledit tube 82.

La deuxième tête 36 est réalisée de façon similaire à la première tête 34. Elle sera donc décrite plus succinctement à l'aide de la figure 1.

La deuxième tête 36 comporte une première pièce annulaire 88 collée au disque 6 par une fine couche de colle rigide type colle époxy, et une deuxième pièce annulaire 90 reliée à la première pièce 88 par une membrane 92 élastique annulaire. Un miroir 94 à réflexion totale fixé par deux joints 96, 98 et un chapeau 100 est logé dans la deuxième pièce 90. La pièce 90 comporte également des moyens de refroidissement 102 similaires à ceux de la pièce 40. La première pièce 88 comprend une tubulure d'arrivée de gaz 104 débouchant dans une cavité 106 étanche formée à l'intérieur des pièces 88, 90, de la membrane 92 collé à ces deux pièces et du miroir 94. Le tube laser 12 débouche dans cette cavité 106.

Des moyens d'orientation de la deuxième pièce 90 par rapport à la première pièce 88 sont disposés dans la deuxième tête 36 de façon identique à la première tête 34. Ils sont constitués de quatre vis permettant d'aligner la normale au miroir 94 avec l'axe 13 du tube laser.

De préférence, les têtes 34, 36 sont en alliage d'aluminium bon conducteur de la chaleur et les membranes 42, 92 sont en acier inoxydable.

La structure de laser à gaz qui vient d'être décrite est très avantageuse en ce qui concerne les contraintes dues à la chaleur. Comme il a été dit précédemment, il est nécessaire de conserver l'alignement entre la normale à la lame semi-transparente 48, la normale au miroir à réflexion total 94 et l'axe 13 du tube laser 12. Or, la structure selon l'invention et surtout la répartition judicieuse de moyens de collage différents permettent de limiter les variations angulaires intempestives mais aussi de diminuer fortement les bruits occasionnés par les dilatations, les frottements, les liaisons, bruits qui sont supprimés par les collages. On diminue ainsi les effets de ruptures d'impédance thermique et mécanique dues aux discontinuités dans le milieu de propagation de la chaleur.

Plus précisément, le tube 2, les disques 4, 6, les premières pièces 38, 88 forment un ensemble homogène et isotherme. Il n'y a donc pas dans ces pièces de contraintes dues à la dilatation thermique susceptibles d'occasionner des variations angulaires.

Le tube laser 12, dont la température est plus élevée que l'ensemble précédent possède une certaine liberté de dilatation grâce au collage souple du tube laser 12 dans les orifices 8 et 10. Il en est de même pour les tubulures d'arrivée de gaz et de pompage 26, 28, 30, 32 grâce à leur collage souple sur le tube 2 par les joints 26b, 28b, 30b, 32b.

L'énergie électromagnétique transportée par le faisceau laser issu du tube laser 12 échauffe très fortement la lame semi-transparente 48 et le miroir 94 et ceux-ci pourraient se déformer dans leur logement. Les moyens de refroidissement 82, 102 et la bonne conductibilité thermique de l'alliage d'aluminium formant les deuxièmes pièces 40 et 90 favorisent la diffusion de la chaleur et permettent d'éviter toute déformation de la lame 48 et du miroir 94. De plus, la chaleur issue de la lame 48 et du miroir 94 ne diffuse pas vers les premières pièces 38, 88 grâce aux membranes 42 et 92 qui font office d'isolant thermique. La fonction d'orientation et de refroidissement des dispositifs de réflexion est ainsi indépendante de la fonction de liaison de ces dispositifs avec le tube enceinte et de la fonction de liaison du tube laser avec le tube enceinte. La déformation thermique homogène des deuxièmes pièces 40 et 90 n'introduit donc aucune variation angulaire des normales à la lame 48 et au miroir 94 par rapport à l'axe 13 du tube laser 12. Les caractéristiques du laser se conservent ainsi, quelle que soit la puissance de fonctionnement du laser.

Un autre mode de réalisation du laser selon l'invention est représenté partiellement sur la figure 4.

Les éléments similaires à ceux de la figure 1 portent les mêmes références. On ne décrira que la moitié gauche du laser.

Le laser comporte un tube 2 obturé par un disque 4 sur lequel est fixée une tête 34. Contrairement à la figure 1, la fixation du tube 2 et de la tête 34 sur le disque 4 ne se fait plus par collage mais par bridage au moyen d'un ensemble bride 200.

De la même façon, le tube laser 12 n'est plus fixé dans l'orifice 8 du disque 4 par collage mais au moyen d'un manchon 202 logé fixement dans cet orifice 8 et de joints 204 disposés de façon étanche entre le manchon 202 et le tube laser 12 et maintenus par une vis presse-joint 206. Le tube laser 12 peut donc se dilater librement tout en restant centré dans l'orifice 8.

Des plaques 208 formant chicane et ayant par exemple la forme de croissant sont disposées dans l'espace annulaire 20 défini entre le tube 2 et le tube laser 12 et en occupe environ les trois quart de la section transversale. Ces plaques 208 sont régulièrement espacées longitudinalement et maintenues par des barres de fixation 210. Les plaques 208 permettent un brassage et une bonne homogénéisation du liquide réfrigérant circulant dans l'enceinte 20 et par conséquent un refroidissement efficace du tube laser et des éléments en contact avec ce liquide.

Bien entendu, la description ci-dessus n'a été donnée qu'à titre d'exemple, toutes modifications dans les formes de réalisation pouvant être envisagées sans modifier l'invention.

Par exemple, la longueur du tube et donc le nombre de tubulures d'arrivée de gaz et de pompage dépendent de la puissance désirée du faisceau laser. On peut envisager une structure de laser à gaz selon l'invention comportant deux tubulures d'arrivée de gaz 44, 104 dans les têtes 34 et 36 respectivement, une seule tubulure de pompage 28 sensiblement au milieu du tube enceinte, et trois électrodes 26a, 28a et 30a. Le supportage de la structure peut se faire par deux pieds en forme de V disposés sous le tube enceinte mais d'autres supports sont envisageables.

## Revendications

1. Structure de laser à gaz comportant :
   - un tube laser (12),
   - un tube enceinte (2, 4, 6) dans lequel est monté le tube laser (12),
   - des dispositifs de réflexion (48, 94) disposés vis-à-vis des extrémités dudit tube laser (12),
   - des moyens d'orientation (58, 60, 62, 64) de ces dispositifs de réflexion (48, 94),
   - les dispositifs de réflexion (48, 94) ainsi que les moyens d'orientation (58, 60, 62, 64) associés étant montés sur le tube enceinte (2, 4, 6) indépendamment du tube laser (12), caractérisée en ce que le tube laser (12) est monté dans le tube enceinte (2, 4, 6) par des moyens de fixation autorisant le libre dilatation du tube laser (12) par rapport au tube enceinte (2, 4, 6).

2. Structure de laser à gaz selon la revendication 1, caractérisée en ce que le tube enceinte comprend un tube (2) obturé par deux disques (4, 6) disposés chacun aux deux extrémités de ce tube (2) et percés chacun d'un orifice (8, 10), le tube laser (12) étant disposé dans le tube enceinte (2, 4, 6) et traversant les orifices (8, 10).

3. Structure de laser à gaz selon la revendication 2, caractérisée en ce que les dispositifs de réflexion (48, 94) sont respectivement supportés par deux têtes (34, 36) fixées sur chacun des disques (4, 6) et constituées chacune de deux pièces (38, 88), (40, 90) reliées par une membrane élastique (42, 92), l'une des pièces (38, 88) étant fixée sur le disque (4, 6) correspondant et l'autre pièce (40, 90) portant le dispositif de réflexion (48, 94) correspondant, de telle sorte que chaque tête forme une cavité (56, 106) étanche dans laquelle débouche le tube laser (12).

4. Structure de laser à gaz selon la revendication 3, caractérisée en ce que lesdits moyens d'orientation (58, 60, 62, 64) permettent l'orientation des pièces (40, 90) portant les dispositifs de réflexion (48, 94) de telle sorte que ces dispositifs de réflexion soient perpendiculaires à l'axe (13) du tube laser (12).

5. Structure de laser à gaz selon l'une quelconque des revendications 2 à 4, caractérisée en ce que des tubes de refroidissement (22, 24) débouchent dans le tube enceinte (2), permettant l'introduction et la sortie d'un fluide réfrigérant circulant entre le tube laser (12) et le tube enceinte (2).

6. Structure de laser à gaz selon l'une quelconque des revendications 2 à 5, caractérisée en ce que des tubulures (26, 28, 30, 32) d'arrivée de gaz et de pompage traversant le tube enceinte (2) sont reliées au tube laser (12).

7. Structure de laser à gaz selon l'une quelconque des revendications 3 à 6, caractérisée en ce que des tubulures d'arrivée de gaz (44, 104) communiquent avec lesdites cavités (56, 106).

8. Structure de laser à gaz selon l'une quelconque des revendications 1 à 7, caractérisée en ce que lesdits moyens de fixation du tube laser (12) sur le tube enceinte (2, 4, 6) sont constitués par une colle souple.

9. Structure de laser à gaz selon l'une quelconque des revendications 2 à 7, caractérisée en ce que lesdits moyens de fixation du tube laser (12) sur le tube enceinte (2, 4, 6) comportent un manchon (202) logé fixement dans chacun des orifices (8, 10) et au moins un joint (204) disposé de façon etanche entre le manchon (202) et le tube laser (12).

10. Structure de laser à gaz selon l'une quelconque des revendications 3 à 9, caractérisée en ce que les liaisons du tube enceinte (2) et des têtes (34, 36) sur les disques (4, 6) sont assurées par collage rigide.

11. Structure de laser à gaz selon l'une quelconque des revendications 6 à 10, caractérisée en ce que les liaisons entre les tubulures (26, 28, 30, 32) et le tube enceinte (2), entre les pièces (38, 88, 40, 90) de chacune des têtes (34, 36) et les membranes (42, 92), entre les tubes de refroidissement (22, 24) et le tube (2) sont assurés par collage.

12. Structure de laser à gaz selon l'une quelconque des revendications 2 à 11, caractérisée en ce que le tube enceinte (2, 4, 6) est en verre borosilicate.

13.Structure de laser à gaz selon l'une quelconque des revendications 3 à 12, caractérisée en ce que les membranes (42, 92) sont métalliques.

14. Structure de laser à gaz selon l'une quelconque des revendications 3 à 13, caractérisée en ce que les pièces (40, 90) portant les dispositifs de réflexion (48, 94) sont pourvues de moyens de refroidissement (82, 102).

15. Structure de laser à gaz selon l'une quelconque des revendications 1 à 14,caractérisée en ce que des plaques formant chicane sont disposées dans l'espace annulaire (20) défini entre le tube (2) et le tube laser (12).

## Patentansprüche

1. Gaslasergerät, enthaltend:
– ein Laserrohr (12),
– eine Rohrumhüllung (2, 4, 6), in der das Laserrohr (12) montiert ist,
– Reflektorvorrichtungen (48, 94), die gegenüber den Enden des genannten Laserrohrs (12) angeordnet sind,
– Ausrichteinrichtungen (58, 60, 62, 64) für diese Reflektorvorrichtungen (48, 94), wobei die Reflektorvorrichtungen (48, 94) sowie die zugeordneten Ausrichteinrichtungen (58, 60, 62, 64) an dem Umhüllungsrohr (2, 4, 6) unabhängig vom Laserrohr (12) befestigt sind, dadurch gekennzeichnet, daß das Laserrohr (12) in dem Umhüllungsrohr (2, 4, 6) mittels Befestigungseinrichtungen montiert ist, die die freie Verschiebung des Laserrohrs (12) gegenüber dem Umhüllungsrohr (2, 4, 6) erlauben.

2. Gaslasergerät nach Anspruch 1, dadurch gekennzeichnet, daß das Umhüllungsrohr ein Rohr (2) enthält, das von zwei Platten (4, 6) verschlossen ist, die jeweils an den zwei Enden des Rohrs (2) angeordnet und jeweils von einer Öffnung (8, 10) durchdrungen sind, wobei das Laserrohr (12) in dem Umhüllungsrohr (2, 4, 6) angeordnet ist und die Öffnungen (8, 10) durchquert.

3. Gaslasergerät nach Anspruch 2, dadurch gekennzeichnet, daß die Reflektorvorrichtungen (48, 94) jeweils von zwei Köpfen (34, 36) gehalten sind, die auf jeder der Platten (4, 6) befestigt sind und die jeweils aus zwei Teilen (38, 88; 40, 90) bestehen, die durch eine elastische Membran (42, 92) verbunden sind, wobei eines der Teile (38, 88) an der zugehörigen Platte (4, 6) befestigt ist und das andere Teil (40, 90) die zugehörige Reflektorvorrichtung (48, 94) trägt, so daß jeder Kopf eine dichte Kammer (56, 106) bildet, in die das Laserrohr (12) mündet.

4. Gaslasergerät nach Anspruch 3, dadurch gekennzeichnet, daß die genannten Ausrichteinrichtungen (58, 60, 62, 64) die Ausrichtung der Teile (40, 90), die die Reflektorvorrichtungen (48, 94) halten, derart ermöglichen, daß diese Reflektorvorrichtungen senkrecht zur Achse (13) des laserrohrs (12) sind.

5. Gaslasergerät nach einem der Ansprüche 2 bis 4, dadurch gekennzrichnet, daß Kühlrohre (22, 24), die in das Umhüllungsrohr (2) münden, die Einleitung und die Ableitung eines Kühlfluides erlauben, das zwischen dem Laserrohr (12) und dem Umhüllungsrohr (2) zirkuliert.

6. Gaslasergerät nach einem der Ansprüche 2 bis 5, dadurch gekennzeichnet, daß Rohrleitungen (26, 28, 30, 32) für die Zuführung von Gas und für das Umpumpen, die das Umhüllungsrohr (2) durchqueren, mit dem Laserrohr (12) verbunden sind.

7. Gaslasergerät nach einem der Ansprüche 3 bis 6, dadurch gekennzeichnet, daß die Rohrleitungen für die Zuführung von Gas (44, 104) mit den genannten Kammern (56, 106) in Verbindung stehen.

8. Gaslasergerät nach einem der Ansprüche 1 bis 7, dadurch gekennzeichnet, daß die genannten Befestigungseinrichtungen für das Laserrohr (12) an dem Umhüllungsrohr (2, 4, 6) eine Manschette (202) aufweisen, die fest in jeder der Öffnungen (8, 10) angeordnet ist, sowie wenigstens eine Dichtung (204), die abgedichtet zwischen der Manschette (202) und dem Laserrohr (12) angeordnet ist.

10. Gaslasergerät nach einem der Ansprüche 3 bis 9, dadurch gekennzeichnet, daß die Verbindungen des Umhüllungsrohrs (2) und der Köpfe (34, 36) an den Platten (4, 6) durch starre Verklebung gesichert sind.

11. Gaslasergerät nach einem der Ansprüche 6 bis 10, dadurch gekennzeichnet, daß die Verbindungen zwischen den Rohrleitungen (26, 28, 30, 32) und dem Umhüllungsrohr (2), zwischen den Teilen (38, 88, 40, 90) eines jeden Kopfes (34, 36) und den Mambranen (42, 92), zwischen den Kühlrohren (22, 24) und dem Rohr (2) durch Verklebung gesichert sind.

12. Gaslasergerät nach einem der Ansprüche 2 bis 11, dadurch gekennzeichnet, daß das Umhüllungsrohr (2, 4, 6) aus Borsilikatglas besteht.

13. Gaslasergerät nach einem der Ansprüche 3 bis 12, dadurch gekennzeichnet, daß die Membranen (42, 92) metallisch sind.

14. Gaslasergerät nach einem der Ansprüche 3 bis 13, dadurch gekennzeichnet, daß die Teile (40, 90), die die Reflektorvorrichtungen (48, 94) tragen, mit Kühleinrichtungen (82, 102) versehen sind.

15. Gaslasergerät nach einem der Ansprüche 1 bis 14, dadurch gekennzeichnet, daß Schikanen bildende Platten in dem ringförmigen Zwischenraum (20) angeordnet sind, der zwischen dem Rohr (2) und dem Laserrohr (12) ausgebildet ist.

**Claims**

1. Gas laser structure comprising:
   - a laser tube (12),
   - an enclosure tube (2, 4, 6) in which the laser tube (12) is mounted,
   - reflection devices (48, 94) disposed facing the ends of the said laser tube (12),
   - means (58, 60, 62, 64) for orienting these reflection devices (48, 94),
   - the reflection devices (48, 94) as well as the associated orienting means (58, 60, 62, 64) being mounted on the enclosure tube (2, 4, 6) independently of the laser tube (12), characterized in that the laser tube (12) is mounted within the enclosure tube (2, 4, 6) by fixing means permitting the free expansion of the laser tube (12) in relation to the enclosure tube (2, 4, 6).

2. Gas laser structure according to Claim 1, characterized in that the enclosure tube comprises a tube (2) obturated by two discs (4, 6) each disposed at the two ends of this tube (2) and each pierced by an orifice (8, 10), the laser tube (12) being disposed within the enclosure tube (2, 4, 6) and passing through the orifices (8, 10).

3. Gas laser structure according to Claim 2, characterized in that the reflection devices (48, 94) are respectively supported by two heads (34, 36) fixed on each one of the discs (4, 6) and each consisting of two parts (38, 88; 40, 90) connected by an elastic membrane (42, 92), one of the parts (38, 88) being fixed on the corresponding disc (4, 6) and the other part (40, 90) carrying the corresponding reflection device (48, 94), in such a manner that each head forms a sealed cavity (56, 106) into which the laser tube (12) opens.

4. Gas laser structure according to Claim 3, characterized in that the said orienting means (58, 60, 62, 64) permit the orientation of the parts (40, 90) carrying the reflection devices (48, 94) in such a manner that these reflection devices are perpendicular to the axis (13) of the laser tube (12).

5. Gas laser structure according to any one of Claims 2 to 4, characterized in that cooling tubes (22, 24) open into the enclosure tube (2), permitting the introduction and the withdrawal of a refrigerant fluid circulating between the laser tube (12) and the enclosure tube (2).

6. Gas laser structure according to any one of Claims 2 to 5, characterized in that gas inlet and pumping connections (26, 28, 30, 32) passing through the enclosure tube (2) are connected to the laser tube (12).

7. Gas laser structure according to any one of Claims 3 to 6, characterized in that gas inlet connections (44, 104) communicate with the said cavities (56, 106).

8. Gas laser structure according to any one of Claims 1 to 7, characterized in that the said means for fixing the laser tube (12) on the enclosure tube (2, 4, 6) consist of a flexible adhesive.

9. Gas laser structure according to any one of Claims 2 to 7, characterized in that the said means for fixing the laser tube (12) on the enclosure tube (2, 4, 6) comprise a sleeve (202) fixedly accommodated in each one of the orifices (8, 10) and at least one seal (204) disposed in a sealing manner between the sleeve (202) and the laser tube (12).

10. Gas laser structure according to any one of Claims 3 to 9, characterized in that the linkages of the enclosure tube (2) and of the heads (34, 36) on the discs (4, 6) are provided by rigid cementing.

11. Gas laser structure according to any one of Claims 6 to 10, characterized in that the linkages between the connections (26, 28, 30, 32) and the enclosure tube (2), between the parts (39, 99, 40, 90) of each one of the heads (34, 36) and the membranes (42, 92), and between the cooling tubes (22, 24) and the tube (2) are provided by cementing.

12. Gas laser structure according to any one of Claims 2 to 11, characterized in that the enclosure tube (2, 4, 6) is made of borosilicate glass.

13. Gas laser structure according to any one of Claims 3 to 12, characterized in that the membranes (42, 92) are metallic.

14. Gas laser structure according to any one of Claims 3 to 13, characterized in that the parts (40, 90) carrying the reflection devices (48, 94) are provided with cooling means (82, 102).

15. Gas laser structure according to any one of Claims 1 to 14, characterized in that plates forming a baffle are disposed within the annular space (20) defined between the tube (2) and the laser tube (12).

FIG.1

FIG.3

FIG.2

EP 0 192 525 B1

FIG.4

EP 0 192 525 B1